Europäisches Patentamt

**European Patent Office**

**Office européen des brevets**

(11) Numéro de publication: **0 333 558 B1**

(12) **FASCICULE DE BREVET EUROPEEN**

(45) Date de publication de fascicule du brevet: **13.10.93** (51) Int. Cl.5: **H04L 12/26**

(21) Numéro de dépôt: **89400642.8**

(22) Date de dépôt: **07.03.89**

(54) **Testeur de réseau local à méthode d'accès à test de porteuse et détection de collision (CSMA/CD).**

(30) Priorité: **18.03.88 FR 8803576**

(43) Date de publication de la demande:
**20.09.89 Bulletin 89/38**

(45) Mention de la délivrance du brevet:
**13.10.93 Bulletin 93/41**

(84) Etats contractants désignés:
**DE FR GB IT NL**

(56) Documents cités:
**EP-A- 0 133 139**

**PATENT ABSTRACTS OF JAPAN, vol. 9, no. 19 (E-292)[1742], 25 janvier 1985, page120 E 292 & JP-A-59 167 152**

(73) Titulaire: **BULL S.A.**
**Tour BULL,**
**1, place Carpeaux**
**F-92800 Puteaux(FR)**

(72) Inventeur: **Hald, André**
**26, rue Charles De Gaulle**
**F-78640 Villiers-Saint-Frederic(FR)**

(74) Mandataire: **Gouesmel, Daniel et al**
**BULL S.A.,**
**Tour BULL Cédex 74,**
**PC/TB2803**
**F-92039 Paris La Défense (FR)**

## Description

La présente invention concerne un testeur de réseau local de type à méthode d'accès à test de porteuse et détection de collision (CSMA/CD) dont le système de transmission a une architecture en bus. Elle est plus particulièrement applicable aux tests de bon fonctionnement des circuits de détection de collision dans les réseaux locaux de type ETHERNET, ou encore de type STARLAN.

A partir des années 1970, deux catégories de réseaux de transmission de données ont progressivement été distinguées :
- les réseaux à grande distance, fondés sur l'utilisation des supports de transmission téléphonique (par exemple, liaisons de transmission du Service Public des P.T.T. en France),
- les réseaux locaux, limités à une enceinte privée (immeuble, usine, campus, hôpital) qui ne sont pas dépendants des caractéristiques des liaisons de transmission téléphonique.

Qu'il appartienne à la première ou à la seconde catégorie de réseau de transmission définies ci-dessus, tout réseau est constitué par une pluralité d'unités, généralement appelées "équipement terminal de traitement de données", en abrégé, ETTD, (Data Terminal Equipment, en langue anglaise, en abrégé DTE) ou encore Terminaux ou stations, par commodité de langage. Ces ETTD communiquent entre eux par l'intermédiaire d'un système de transmission. Ce dernier, par exemple, peut avoir une architecture en bus et être constitué par une paire de fils téléphoniques ou un câble coaxial

Dans les réseaux locaux, la transmission des données s'effectue à des débits plus élevés que sur les réseaux à grande distance, par exemple de 100 kbit/s à 100 Mbit/s, pour des distances entre ETTD allant de quelques centaines de mètres à quelques kilomètres. (Pour les réseaux à grande distance, les débits des ETTD sont généralement inférieurs à 100 kbit/s).

Du fait que les ETTD d'un réseau local à architecture en bus partagent un seul système de transmission (on dit encore ligne de transmission), il importe qu'un seul ETTD à la fois émette sur cette même ligne de transmission. Pour résoudre ce problème, les ETTD sont généralement munis d'organes de décision qui n'autorisent l'envoi de messages qu'à condition que celle-ci soit libre. Pour cela, selon une méthode préférée, chaque terminal (ETTD) surveille en permanence les signaux présents sur la ligne et en cas de présence d'un message sur celle-ci, aucun autre message n'est autorisé à être émis. Ainsi les méthodes d'accès conçues pour les réseaux locaux en bus visent à limiter les conflits d'accès dus à l'émission simultanée par plusieurs stations (collisions). Ce procédé est connu sous le sigle anglo-saxon CSMA.

Cependant, malgré cette précaution, il peut se produire qu'une station ne détecte pas la présence d'un message sur la ligne de transmission au moment où elle commande elle-même l'envoi d'un message, bien qu'une autre station soit en train d'émettre. Dans ce genre de réseau, cette situation appelée "collision" est impossible à éviter totalement, notamment à cause du délai de propagation des signaux sur la ligne. Pour remédier à cette difficulté, on utilise généralement un dispositif appelé détecteur de collision qui interrompt l'émission d'un message en cours lorsqu'une telle situation a été détectée. La détection d'une collision provoque l'annulation de la transmission puis une nouvelle tentative d'émission est effectuée, l'émission n'ayant lieu que si la ligne de transmission est à nouveau libre. Cette méthode est connue sous le sigle anglo-saxon CSMA/CD (tiré de l'anglais "Carrier sense multiple access with collision detection").

Les réseaux locaux de type CSMA/CD ont été normalisés par le Comité IEEE de l'institute of Electrical and Electronic Engineers, sous la forme d'une norme dite 802.3, (reprise par l'I.S.O., organisation internationale de normalisation, sous la forme de la norme ISO 8802.3), dont les dispositions essentielles sont les suivantes :
- un ETTD en tant qu'émetteur de données, est soit silencieux, soit en train d'émettre des données.
- un ETTD lorsqu'il est silencieux, peut, en tant que récepteur, soit détecter un silence soit recevoir des données provenant d'un ou plusieurs autres ETTD. Si les données reçues proviennent simultanément de plusieurs ETTD, la valeur de ces données est sans signification, ce qui est le cas lorsqu'on est en présence d'une collision.
- un ETTD qui est en train d'émettre peut, en tant que récepteur, soit détecter que son émission se déroule normalement (sans collision avec les données émises par un ou plusieurs autres ETTD), soit qu'une collision a lieu.

Les principes de la méthode d'accès CSMA/CD sont les suivants :
a) Chaque ETTD qui tente d'émettre une donnée, s'assure avant de le faire, qu'il ne reçoit que du silence, ce dernier doit durer au moins un certain temps (qui s'appelle délai intertrame).
b) En l'absence de collision, l'émission est maintenue pendant au moins une certaine durée : chaque ensemble de données émis, encore appelé trame (frame en anglais), doit avoir une longueur minimale, déterminée en fonction des durées de propagation de celui-ci sur la configuration maximale normalisée du réseau.

c) Après détection d'une collision, il y a émission de données de brouillage puis retour au silence : cela signifie que si un ETTD détecte une collision, il continue à émettre pendant un certain temps, dit durée de brouillage (JAM, en anglais), puis cesse d'émettre. Cette durée est telle que la trame subissant une collision est plus courte que celle définie en b.

d) A la réception, toute donnée qui présente une longueur insuffisante est mise au rebut (longueur inférieure à la longueur minimale définie en b).

e) En cas d'interruption d'une émission, du fait d'une collision, il y a réitération de la tentative d'émission après un délai aléatoire qui s'accroît d'une tentative à la suivante, pour une trame donnée, de façon suffisante pour qu'un taux élevé de collision soit peu probable.

La norme IEEE 802.3 définit également le format des trames. La trame est le message individuel. Elle est structurée, comporte un message de début et de fin, des signaux de synchronisation pour en déduire l'horloge, l'adresse de la station à laquelle est destiné le message, l'adresse de la station émettrice, la longueur des données, les données utiles, etc... . En d'autres termes, la trame est le bloc élémentaire d'informations émises par une station quelconque, qui transite sur la ligne de transmission.

La norme 802.3 définit de plus le protocole régissant le dialogue entre les stations. Ce protocole définit les règles d'accès aux différentes stations et constitue donc un système qui ordonnance la conversation entre celles-ci sans la hiérarchiser.

Ainsi, pour un réseau local de type ETHERNET où le débit de transmission est de 10 Mbit/s, le délai intertrame est de 9,6 microsecondes (qui correspond à la durée de 96 bits) la durée de brouillage (JAM) est de 3,3 microsecondes, (ce qui correspond à la durée de 33 bits). La longueur minimale de la trame sans collision est de 64 octets (512 bits) et la longueur maximale de 1500 octets (12000 bits).

La configuration physique d'un réseau local de type ETHERNET est la suivante :
Le support de transmission normalisé est un câble coaxial d'impédance caractéristique 50 ohms équipé à chaque extrémité d'un bouchon terminateur de 50 ohms. Chaque ETTD est raccordé au câble coaxial par l'intermédiaire d'une unité d'accès au support (medium access unit, en anglais), communément appelée transceiver selon la terminologie anglo-saxonne.

Le réseau de base est constitué d'un segment de câble le long duquel sont répartis des raccordements d'unité d'accès.

Plus généralement, un réseau local est formé par un ensemble de plusieurs réseaux de base, encore appelés segments élémentaires, entre lesquels sont placés des répéteurs. Ceux-ci retransmettent sur un câble les signaux qu'ils reçoivent sur l'autre tout en régénérant leur qualité initiale. Le fonctionnement d'un réseau à plusieurs segments est assuré si le réseau est constitué d'un segment principal et de segments secondaires, chaque segment secondaire étant relié au segment principal soit par un répéteur soit par une paire de répéteurs reliés l'un à l'autre. Les répéteurs et les transceivers comprennent des détecteurs de collision.

Lorsqu'un réseau local de type ETHERNET vient d'être installé et monté dans les différents immeubles d'une enceinte privée, il convient d'en vérifier le fonctionnement avant que les différentes stations ne soient raccordées, par l'intermédiaire des unités d'accès, aux différents segments du réseau. C'est ce qui s'appelle effectuer la recette du réseau.

Pour ce faire, on utilise généralement deux testeurs qui sont des stations mobiles, qui peuvent fonctionner de la même manière que les stations qui sont normalement connectées aux différents segments du réseau, et qui de plus peuvent créer des conditions anormales de fonctionnement pour voir si celles-ci sont détectées en différents endroits spécifiques du réseau par des éléments particuliers de celui-ci.

On connait des testeurs qui permettent de vérifier le bon fonctionnement d'un réseau local et en particulier de vérifier si les détections de collision sont normalement perçues.

Un premier testeur est décrit dans le brevet européen EP-A-133139. Ce document décrit un testeur de réseau local du type à méthode d'accès à test de porteuse et détection de collision (CSMA/CD) et à système de transmission à architecture en bus, le réseau comprenant au moins un segment élémentaire comprenant une pluralité de stations dont chacune est reliée au bus et comprend un circuit d'émission et de réception, le circuit d'émission et de réception n'émettant un message qu'en l'absence d'émission par toutes autres stations du réseau. Par ailleurs, ce circuit d'émission et de réception est analogue à ceux de chaque station, et inclut de plus un dispositif de génération de collision qui émet une trame d'information dès qu'il a reçu du circuit d'encodage et de décodage que contient le testeur un signal indiquant la présence d'une émission d'une trame par une station quelconque du réseau autre que lui-même et un ordre d'émission de la part d'un circuit de commande d'émission également inclus dans le testeur.

On connait également un second testeur, dénommé E-20 de la Société française EXPERDATA, dont le siège social est situé 14, rue de Silly, 92100 BOULOGNE.

Ce testeur comporte un générateur de paquets de trames qui produit de façon continue des trames de petite, moyenne et grande dimension. Il peut faire varier le délai intertrame, et produire des charges de traffic du réseau variant de 2 % au taux maximum de 99.2 % (le taux de charge maximum, encore appelé débit maximum est celui qui est obtenu lorsque l'on émet une série de trames séparées les unes des autres par le délai intertrame de 9,6 microsecondes défini plus haut). Ce testeur peut, soit émettre normalement, en respectant le protocole CSMA/CD, soit fonctionner suivant un mode collision de manière à provoquer volontairement des collisions : alors, dans ce cas, lorsqu'un détecteur de collision ne signale aucune collision, il est considéré comme défectueux.

L'inconvénient des deux testeurs décrits cidessus est leur volume et le fait qu'ils sont constitués de petits composants logiques discrets. En outre, ils ne respectent pas intégralement la norme 802.3 précitée, en ne pratiquant pas notamment l'algorithme de Backoff (répétition d'une émission de trame, un nombre de fois déterminé, lorsqu'il y a collision).

Selon l'invention, le testeur de réseau local du type à méthode d'accès à test de porteuse et détection de collision (CSMA/CD) et à système de transmission à architecture en bus, le réseau comprenant au moins un segment élémentaire comprenant une pluralité de stations dont chacune est reliée au bus et comprend un circuit d'émission et de réception commandé par un circuit de commande d'émission et associé à un circuit d'encodage et de décodage disposé entre le circuit d'émission et le bus, le circuit d'émission et de réception n'émettant un message qu'en l'absence d'émission par toutes autres stations du réseau, et comprenant en outre un circuit d'émission et de réception associé à un circuit d'encodage et de décodage, qui sont analogues à ceux de chaque station, le circuit d'émission et de réception du testeur incluant de plus un dispositif de génération de collision qui émet une trame d'information dès qu'il a reçu du circuit d'encodage et de décodage du testeur un signal $CRS_1$, indiquant la présence d'une émission d'une trame par une station quelconque du réseau autre que lui-même, et un ordre d'émission REM de la part d'un circuit de commande d'émission du testeur, cette dernière trame étant reçu par le circuit d'encodage et de décodage du testeur, est caractérisé en ce qu'il comprend un dispositif d'autorisation de collision disposé entre son circuit d'encodage et de décodage et le dispositif de génération de collision, recevant le dit signal $CRS_1$ de présence d'émission d'une trame sur le réseau et un signal de demande d'émission RTS émis par le dispositif de génération de collision lorsque ce dernier reçoit ledit ordre d'émission REM, et délivrant en retour un signal d'autorisation de collision CTS au dispositif de génération de collision lorsque le signal de présence d'émission $CRS_1$ est actif, ce dernier émettant alors, en réponse au signal d'autorisation de collision, la trame TXD envoyée au circuit d'encodage et de décodage du testeur.

D'autres caractéristiques et avantages de la présente invention apparaîtront dans la description suivante donnée à titre d'exemple non limitatif et en se référant aux dessins annexés.

Sur ces dessins :
- La figure 1, composée des figures 1a, 1b, 1c, montre sous forme de schéma simplifié, comment sont constitués d'une part, des réseaux de type ETHERNET en bus ou utilisant partiellement une étoile optique, et d'autre part, une station, (ou ETTD, ou encore terminal),
- La figure 2 est un schéma fonctionnel simplifié d'un circuit d'émission et de réception d'une station,
- La figure 3, composée des figures 3a et 3b est un chronogramme des différents signaux émis et reçus par le circuit d'émission et de réception de la figure 2,
- La figure 4 montre un testeur de réseau local selon l'invention, avec génération de collisions, utilisable notamment pour un réseau de type ETHERNET,
- La figure 5 est un mode de réalisation particulier du testeur selon l'invention montré à la figure 4, utilisable notamment pour un réseau local de type ETHERNET,
- La figure 6 composée des figures 6a et 6b est un chronogramme de signaux émis ou reçus par le testeur de réseau local selon l'invention, montré à la figure 5, selon un premier mode de fonctionnement,
- La figure 7 est un chronogramme de signaux émis ou reçus par le testeur de réseau local selon l'invention, montré à la figure 5, selon un second mode de fonctionnement,

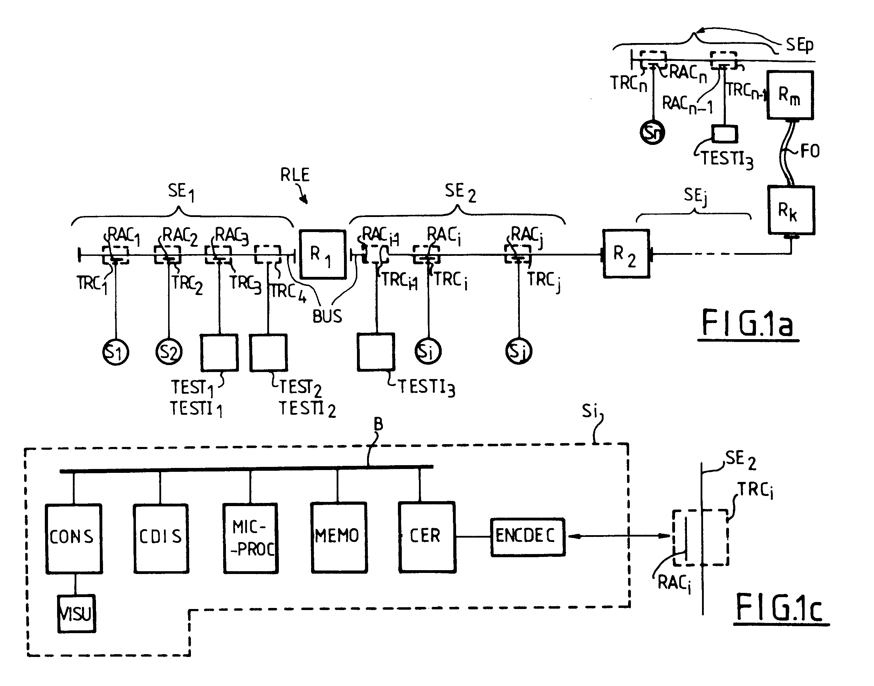

Afin de mieux comprendre comment est constitué et comment fonctionne le testeur de réseau local selon l'invention, on effectuera quelques rappels sur la manière dont sont constitués les réseaux locaux, les circuits d'émission et de réception des différentes stations, ainsi que leur mode de fonctionnement, comme il est illustré aux figures 1a, 1b, 1c, 2, 3a, 3b.

On considère tout d'abord la figure 1a.

Sur cette figure, on a représenté un réseau local RLE qui comprend une pluralité de segments élémentaires $SE_1$, $SE_2$, $SE_j$, ..., $SE_p$.

Chaque segment élémentaire est séparé du segment voisin par un répéteur. Ainsi, le segment

élémentaire $SE_1$ est séparé du segment élémentaire $SE_2$ par le répéteur $R_1$ et le segment élémentaire $SE_2$ est séparé du segment élémentaire voisin, par exemple $SE_j$ par le répéteur $R_2$. Généralement, le réseau de base est constitué d'un segment de câble coaxial le long duquel sont répartis une pluralité de raccordements auxquels peuvent être connectées des unités d'accès. Ainsi le segment élémentaire $SE_1$ comprend une pluralité de raccordements $RAC_1$, $RAC_2$, $RAC_3$, ..., etc. Il peut y avoir jusqu'à cent raccordements sur un même segment de câble élémentaire. A la figure 1a, seuls les trois raccordements précédemment mentionnés ont été représentés. De même, le segment élémentaire $SE_2$ comprend une pluralité de raccordements dont seulement les raccordements $RAC_{i-1}$, $RAC_i$ et $RAC_j$ ont été représentés. A la figure 1a, on n'a représenté que les raccordements $RAC_n$ et $RAC_{n-1}$ pour le segment élémentaire $SE_p$.

Plusieurs stations sont reliées à chaque segment élémentaire par l'intermédiaire d'unités d'accès au support, le branchement sur le câble coaxial constituant le segment s'effectuant en parallèle. Ces unités d'accès au support sont ainsi qu'il a été indiqué plus haut connues sous le nom anglo-saxon de transceiver. Ainsi, les stations $S_1$, $S_2$ sont reliées au segment élémentaire $SE_1$ par les transceivers $TRC_1$ et $TRC_2$. (Ces derniers étant connectés aux raccordements $RAC_1$, $RAC_2$). De même, les stations $S_i$ et $S_j$ sont reliées au segment élémentaire $SE_2$ par l'intermédiaire des transceivers $TRC_i$ et $TRC_j$. (Ces derniers étant connectés aux raccordements $RAC_i$ et $RAC_j$) La station $S_n$ est reliée par l'intermédiaire du transceiver $TRC_n$ au segment élémentaire $SE_p$.

Il convient de noter que les répéteurs $R_k$ et $R_m$ montrés à la figure 1a sont reliés par une fibre optique $F0$, au lieu d'être reliés par un câble coaxial. Ce type de liaison entre répéteurs tend de plus en plus à être utilisé pour des distances relativement longues.

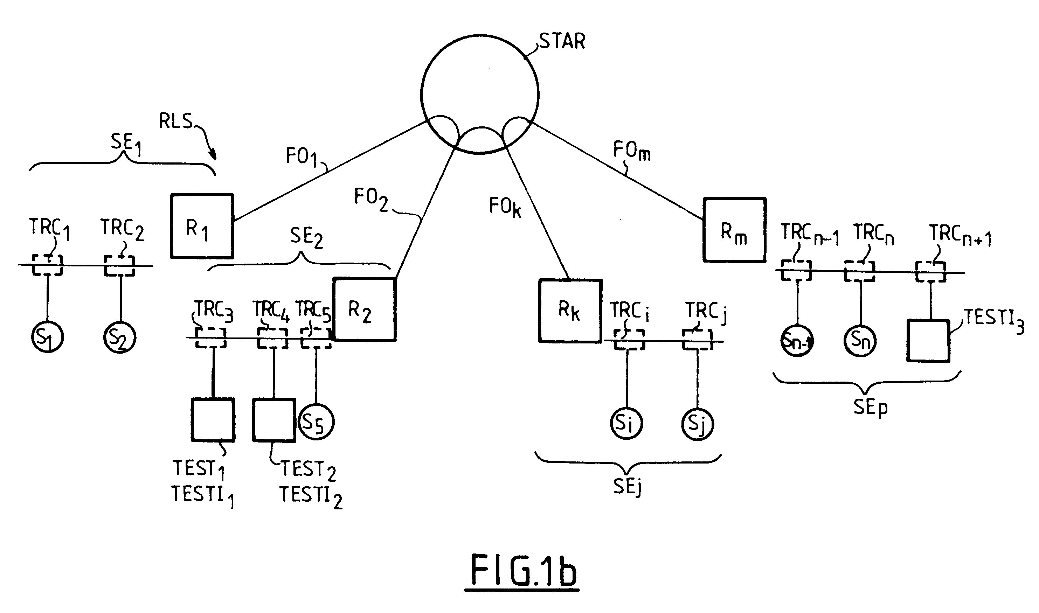

On considère la figure 1b qui représente un réseau local RLS de type ETHERNET avec étoile optique. A la figure 1b, les mêmes références qu'à la figure 1a désignent des éléments identiques. Le réseau RLS comprend donc une pluralité des segments élémentaires $SE_1$, $SE_2$, $SE_j$, ..., $SE_p$. Il comprend par ailleurs une pluralité de répéteurs $R_1$, $R_2$, ..., $R_k$, ..., $R_m$.

Le segment élémentaire $SE_1$ comprend une pluralité de stations $S_1$, $S_2$, ..., branchées sur un même câble coaxial par l'intermédiaire des transceivers $TRC_1$, $TRC_2$, ..., etc.

Le segment élémentaire $SE_2$ comprend une pluralité de stations $S_4$, $S_5$, ..., branchées sur le même câble coaxial par l'intermédiaire des transceivers $TRC_3$, $TRC_4$, $TRC_5$, ..., etc.

Le segment élémentaire $SE_j$ comprend une pluralité de stations $S_i$, $S_j$, ..., branchées sur le même câble coaxial par l'intermédiaire des transceivers $TRC_i$, $TRC_j$, alors que le segment élémentaire $SE_p$ comprend une pluralité de stations ..., $S_n$, $S_{n-1}$, ..., etc, branchées sur le même câble coaxial par l'intermédiaire des transceivers $TRC_{n-1}$ et $TRC_n$.

Le segment élémentaire $SE_1$ est relié au répéteur $R_1$ lui-même relié par l'intermédiaire d'une fibre optique $F0_1$ à un noyau central STAR constitué par une étoile optique. De même, le segment élémentaire $SE_2$ est relié au noyau central STAR par l'intermédiaire d'une fibre optique $F0_2$ alors que les répéteurs $R_k$ et $R_m$ sont reliés respectivement au noyau central STAR par l'intermédiaire des fibres optiques $F0_k$ et $F0_m$. En comparant les figures 1a et 1b, on voit apparaître immédiatement les différences structurelles entre un réseau local RLE et un réseau local RLS avec étoile optique. Dans le premier de ces réseaux, les différents répéteurs (par exemple $R_1$ et $R_2$) sont reliés entre eux par l'intermédiaire d'un segment élémentaire (par exemple $SE_2$) alors que dans le second de ces réseaux, un répéteur (par exemple $R_1$) est relié au répéteur voisin R (par exemple $R_2$) par l'intermédiaire d'une part de fibres optiques et d'autre part du noyau central STAR (fibre optique $F0_1$, noyau central STAR, fibre optique $F0_2$).

Le mode de fonctionnement des deux types de réseau est analogue.

On considère désormais la figure 1c qui représente de façon fort schématique les différents éléments constitutifs d'une station quelconque $S_i$. On a choisi par exemple la station $S_i$ reliée par l'intermédiaire du transceiver $TRC_i$ au segment élémentaire $SE_2$ du réseau local RLE de la figure 1a. Cette station $S_i$ comprend un circuit de gestion des différentes opérations effectuées par la station $S_i$, à savoir le microprocesseur MICPROC, la mémoire MEMO qui stocke les différentes informations à émettre ou reçues par la station $S_i$, un circuit d'émission et de réception CER, relié par l'intermédiaire d'un encodeur-décodeur ENCDEC au transceiver $TRC_i$, un contrôleur de disques CDIS et un contrôleur CONS de console VISU, et éventuellement d'autres contrôleurs. Les différents éléments MICPROC, MEMO, CER, CDIS, CONS sont reliés à un même bus B.

Lorsque la station $S_i$ désire émettre et envoyer un message sur le segment $SE_2$ du réseau RLE, le microprocesseur MICPROC donne l'ordre d'émission qui est transmis au circuit d'émission et de réception CER. Celui-ci reçoit les informations à émettre qui étaient stockées dans la mémoire MEMO et les envoie par l'intermédiaire de l'encodeur ENCDEC et du transceiver $TRC_i$ sur le segment $SE_2$. Cet envoi d'informations se fait sous la forme d'une succession de trames d'informations séparées par des délais intertrame ainsi qu'il a été expliqué plus haut. Le codeur ENCDEC émet les informations suivant un code Manchester.

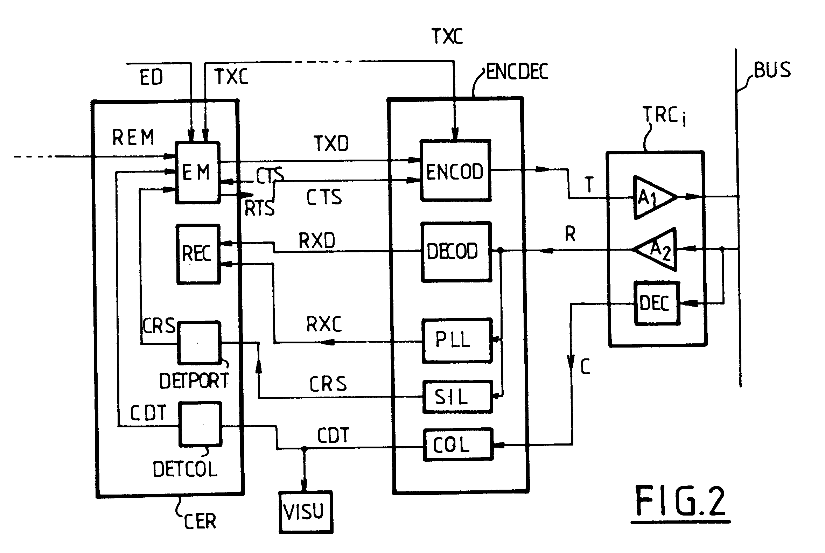

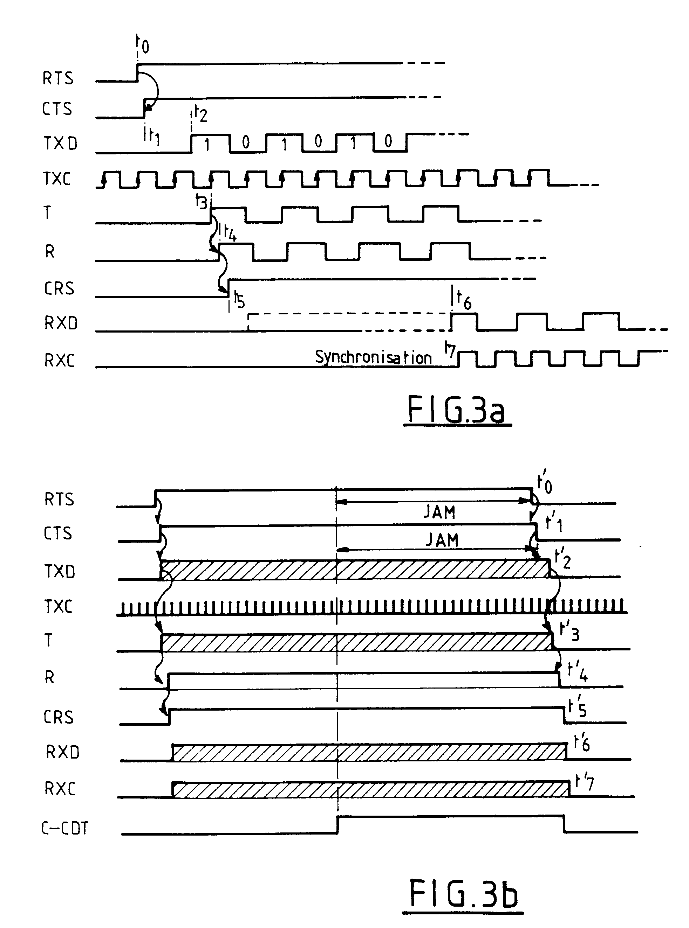

On considère désormais les figures 2, 3a et 3b.

A la figure 2, on a représenté de manière très simplifiée le circuit d'émission-réception CER associé au circuit d'encodage et de décodage ENCDEC appartenant à la station $S_i$ de la figure 1C. On a également fait figurer à la figure 2 l'unité d'accès (transceiver) $TRC_i$.

Le circuit d'émission et de réception CER comprend :

- un circuit d'émission EM,
- un circuit de réception REC,
- un détecteur de porteuse DETPORT,
- un enregisteur de collision DETCOL.

Le circuit d'émission et de réception CER peut être réalisé sous la forme d'un circuit à très haute intégration VLSI fabriqué par la Société INTEL sous la référence 82856.

Le circuit d'encodage et de décodage ENCDEC comprend :

- un circuit d'encodage ENCOD,
- un circuit de décodage DECOD,
- un circuit de synchronisation du type à rebouclage de phase PLL,
- un détecteur SIL de présence d'émission sur l'une des stations quelconque du réseau local (on peut dire également "détecteur d'absence de silence"),
- un circuit d'enregistrement de collisions COL.

Le circuit d'encodage et de décodage ENCDEC est par exemple réalisé sous la forme d'un circuit à très haute intégration VLSI, fabriqué par la Société INTEL sous la référence 82501.

L'unité d'accès $TRC_i$ au support de transmission BUS est un équipement électronique de raccordement de la station $S_i$ sur le réseau. Cet équipement est normalisé par l'IEEE.

Cette unité d'accès $TRC_i$ comprend notamment :

- un premier amplificateur $A_1$,
- un second amplificateur $A_2$,
- un détecteur de collision DEC.

L'ensemble des éléments constitutifs des circuits CER, ENCDEC, et $TRC_i$ ne sera pas davantage détaillé dans cet exposé. La manière dont est constitué chacun des éléments constitutifs est décrite de manière beaucoup plus détaillée dans les notices techniques du constructeur INTEL pour ce qui concerne les circuits CER et ENCDEC et dans la norme IEEE pour le transceiver $TRC_i$.

On se limitera ici à décrire les grandes lignes de fonctionnement de ces trois circuits, en référence aux figures 3a et 3b.

L'ensemble des signaux émis et reçus par les circuits CER, ENCDEC, $TRC_i$ est conforme au protocole d'accès CSMA/CD défini plus haut.

A l'instant $t_0$ le circuit d'émission EM reçoit un ordre d'émission REM qui lui est envoyé par le circuit de contrôle de gestion MICPROC. Le circuit EM émet alors le signal RTS égal au 1 logique à ce même instant $t_0$ si l'on constate qu'il n'y a aucune émission de la part d'une autre station du réseau RLE. En fonctionnement normal (figure 3a), le circuit d'émission EM reçoit alors le signal CTS à l'instant $t_1$ légèrement postérieur à $t_0$ et commence alors l'émission d'une trame d'informations suivant le format normalisé pour les réseaux de type CSMA/CD, si aucune autre station n'émet à ce moment là. Cette trame TXD est émise à l'instant $t_2$ postérieur à $t_1$ et est composée d'une suite de bits égaux à 1 ou 0, les informations de la trame TXD étant d'abord générées par le circuit EM (préambule) puis par exemple extraites de la mémoire MEMO montrée à la figure 1c. Les informations contenues dans la trame TXD sont synchronisées par des signaux d'horloge TXC contrôlés par une horloge extérieure (par exemple un quartz) non représentée pour simplifier la figure 2.

Les signaux CTS, TXD, TXC sont envoyés au circuit d'encodage ENCOD. Celui-ci encode alors les données de la trame TXD selon le code Manchester précédemment cité et envoie la trame sous forme d'un signal T synchronisé par l'horloge TXC au transceiver $TRC_i$. Il est émis à partir de l'instant $t_3$ postérieur à l'instant $t_2$.

Le signal T est amplifié par l'amplificateur $A_1$ et envoyé sur le support physique de transmission BUS du réseau RLE.

Le transceiver $TRC_i$ reçoit (en l'absence de tout autre émission par l'une des autres stations du réseau RLE) la trame émise par le circuit d'encodage ENCOD. Il l'amplifie grâce à l'amplificateur $A_2$ lequel délivre alors un signal R analogue au signal T mais décalé dans le temps par rapport a celui-ci, le signal R étant envoyé par l'amplificateur $A_2$ au circuit de décodage DECOD du circuit ENC-DEC à l'instant $t_4$ postérieur à l'instant $t_3$. Le signal R est également envoyé au circuit de synchronisation PLL et au détecteur de présence d'émission SIL. Le circuit de synchronisation PLL, du type bien connu à rebouclage de phase (Phase Lock Loop en anglais) émet le signal de synchronisation RXC qui est envoyé au circuit de réception REC du circuit d'émission-réception CER. Ce circuit de réception REC reçoit également le signal RXD qui est émis par le circuit de décodage DECOD a l'instant $t_6$ postérieur à l'instant $t_4$. Le délai temporel qui sépare les instants $t_6$ et $t_4$ a une durée correspondante à l'émission de quelques bits. Cela correspond au temps nécessaire, pour le circuit PLL, à l'instant $t_7$, a reconstituer les données d'horloge RXC à partir du signal R. Le détecteur SIL émet, quant à lui, à l'instant $t_5$ postérieur à $t_4$ (on a

$t_5$ compris entre $t_4$ et $t_6$) un signal CRS égal au 1 logique, ce qui signifie qu'il y a présence d'informations sur les lignes transportant les signaux R et RXD. Cela signifie donc qu'il y a présence d'une émission d'informations quelque part sur le réseau (il s'agit bien entendu ici des informations émises par la station $S_i$ elle-même, puisque toute station reçoit les informations qu'elle émet elle-même, voir plus haut). Le circuit REC transmet les informations qu'il reçoit à la mémoire MEMO.

Lorsqu' il y a présence sur le support physique de transmission du réseau d'une émission effectuée simultanément par une autre station que la station $S_i$, le détecteur de collisions DEC du transceiver $TRC_i$ est actionné et émet un signal C indiquant une collision, qui est envoyé au circuit d'enregistrement de collisions COL du circuit ENCDEC lequel transmet ce signal sous forme d'un autre signal CDT à l'enregistreur de collision DETCOL du circuit d'émission et de réception CER (figure 3b). Ce dernier transmet le signal CDT égal au 1 logique au circuit d'émission EM. Celui-ci va continuer à émettre pendant un certain temps, appelé durée de brouillage, des signaux de brouillage (JAM en anglais). A la fin de l'émission de données de brouillage, les signaux, à savoir RTS, CTS, TXD, T, R, CRS, RXD, et RXC retombent successivement au zéro logique comme indiqué à la figure 3b, c'est-à-dire aux instants $t'_0$, $t'_1$, $t'_2$, $t'_3$, $t'_4$, $t'_5$, $t'_6$, $t'_7$.

Ainsi qu'il a été indiqué plus haut, un testeur de réseau local doit tester le réseau monté par les entreprises installatrices dans les enceintes privées qui en seront équipées. La vérification du bon fonctionnement du réseau est effectuée une fois que les entreprises installatrices ont terminé leur travail.

Pour effectuer la recette d'un réseau local qui vient d'être installé, incluant les éléments actifs transceivers et répéteurs (il est alors indifférent que les stations soient ou non connectées au réseau), on utilise deux testeurs $TEST_1$ et $TEST_2$ que l'on dispose successivement en différents endroits du réseau. Ainsi qu'on peut le voir à la figure 1a, le testeur $TEST_1$ est montré installé sur le segment élémentaire $SE_1$ et est raccordé au support physique de transmission BUS par l'intermédiaire du transceiver $TRC_3$.

Le testeur $TEST_2$ est raccordé au segment élémentaire $SE_1$ par l'intermédiaire du transceiver $TRC_4$.

A la figure 1b, les deux testeurs $TEST_1$ et $TEST_2$ sont montrés raccordés au segment élémentaire $SE_2$ respectivement par l'intermédiaire des transceivers $TRC_3$ et $TRC_4$.

Les deux testeurs vont donc être disposés en différents endroits du réseau. Ce sont donc des stations mobiles qui ont pour but de vérifier que le réseau fonctionne correctement. A cet effet, ils envoient des messages normaux tout-à-fait identiques aux messages envoyés par les différentes stations. De plus, ils créent des conditions anormales de fonctionnement pour voir si cela est détecté.

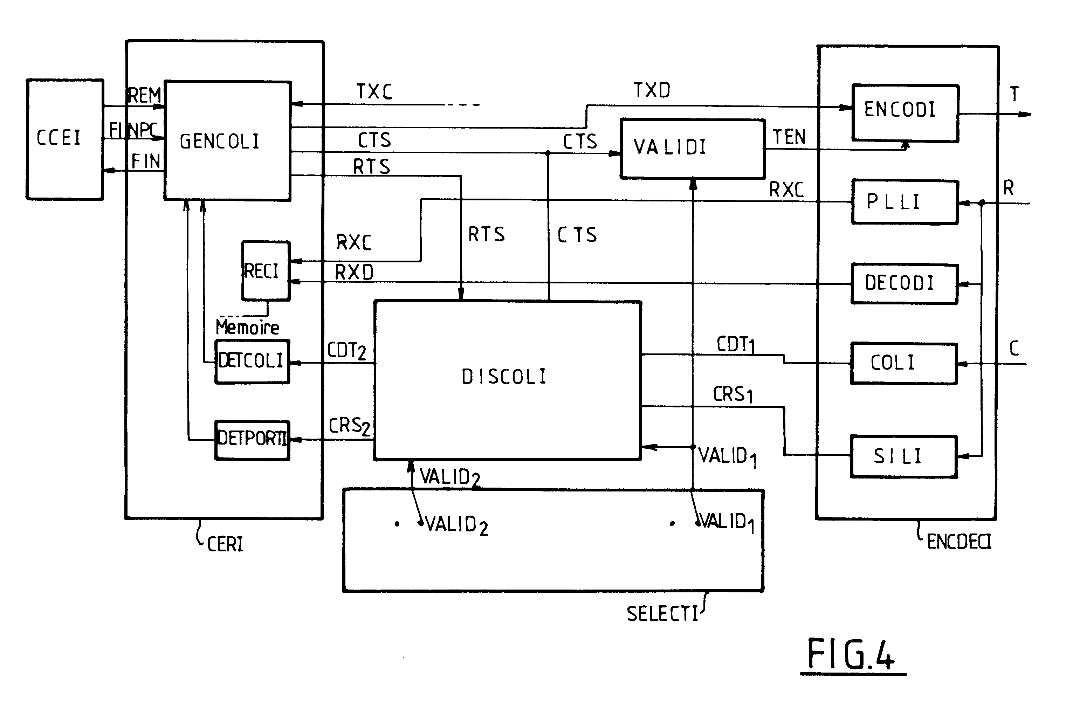

Le but du testeur TESTI selon l'invention montré à la figure 4 est notamment de vérifier le bon fonctionnement de l'ensemble des détecteurs de collisions contenus dans les transceivers et dans les répéteurs aussi bien du réseau RLE de type ETHERNET montré à la figure 1a que du réseau RLS montré à la figure 1b.

Le testeur TESTI selon l'invention montré à la figure 4 comprend les éléments constitutifs essentiels suivants :
- Le circuit d'émission et de réception CERI,
- Le circuit d'encodage et de décodage ENCDECI,
- Le dispositif d'autorisation de collision DISCOLI,
- Le dispositif de validation d'émission VALIDI,
- Le dispositif SELECTI de commande de modalité de fonctionnement.
- Le circuit de commande d'émission CCEI.

Le dispositif d'encodage et de décodage ENCDECI du testeur selon l'invention comprend :
- Un circuit d'encodage ENCODI, un circuit de décodage DECODI, un circuit de synchronisation PLLI, un détecteur de présence d'émission SILI, un circuit d'enregistrement de collision COLI. Tous ces éléments sont identiques aux éléments correspondants du dispositif d'encodage et de décodage ENCDEC montré à la figure 2.

Le circuit d'émission et de réception CERI comprend les éléments constitutifs suivants :
- Le générateur de collisions GENCOLI,
- Le circuit de réception RECI,
- Le détecteur de porteuse DETPORTI,
- L'enregistreur de collision DETCOLI.

Les éléments RECI, DETPORTI, DETCOLI sont strictement analogues aux éléments correspondants du circuit CER de la figure 2 et ont même fonction.

Le dispositif d'autorisation de collision DISCOLI est disposé entre les circuits CERI et ENCDECI. Il est commandé par le dispositif de commande de modalité de fonctionnement SELECTI.

Le dispositif DISCOLI reçoit les signaux $CRS_1$ et $CDT_1$ envoyés respectivement par le détecteur de présence d'émission SILI et le circuit d'enregistrement COLI, ainsi que les signaux $VALID_1$ et $VALID_2$ émis par le dispositif de commande de modalité de fonctionnement SELECTI. Il reçoit par ailleurs le signal RTS et émet le signal CTS. Il envoie les signaux $CRS_2$ et $CDT_2$ au détecteur de porteuse DETPORTI et à l'enregistreur de collision DETCOLI.

Le dispositif de validation d'émission VALIDI est également disposé entre les circuits CERI et ENCDECI. Il reçoit le signal CTS envoyé par le dispositif d'autorisation de collision DISCOLI et le signal $VALID_1$. Il émet le signal TEN envoyé à l'encodeur ENCODI.

Les signaux émis ou reçus par le circuit CERI ou le circuit d'encodage ENCDECI, à savoir TXC, TXD, RXC, RXD, RTS, CTS sont désignés de la même façon qu'aux figures 2, 3a et 3b et ont même fonctionnalité.

Le circuit de commande d'émission CCEI émet un signal REM envoyé à GENCOLI, lorsqu'il y a demande d'émission (par exemple de la part de l'opérateur qui met en oeuvre le testeur selon l'invention), et actionne alors le circuit CCEI.

Pour mieux comprendre le fonctionnement du testeur selon l'invention TESTI, il importe de préciser auparavant le rôle du dispositif SELECTI et des deux signaux $VALID_2$ et $VALID_1$ qu'il délivre.

Ce dispositif peut être commandé par l'opérateur qui met en oeuvre le testeur TESTI selon l'invention.

Suivant la valeur de $VALID_2$, le testeur selon l'invention peut :

1) <u>Soit fonctionner comme une station normale :</u> Dans ce cas, par exemple, $VALID_2$ est égal au 1 logique. GENCOLI fonctionne exactement comme le circuit EM du circuit CER de la figure 2. Dès qu'il y a une demande d'émission REM, GENCOLI émet RTS et le dispositif DISCOLI émet CTS qui est transmis d'une part à GENCOLI, d'autre part à VALIDI qui le retransmet au circuit ENCODI qui délivre le signal T. $CRS_2$ et $CDT_2$ sont strictement identiques à $CRS_1$ et $CDT_1$ (voir figures 3a et 3b),

2) <u>Soit fonctionner suivant une modalité de collision qui sera exposée ci-dessous. Alors $VALID_2$ est égal au zéro logique.</u> On est alors dans le cadre de l'invention proprement dite.

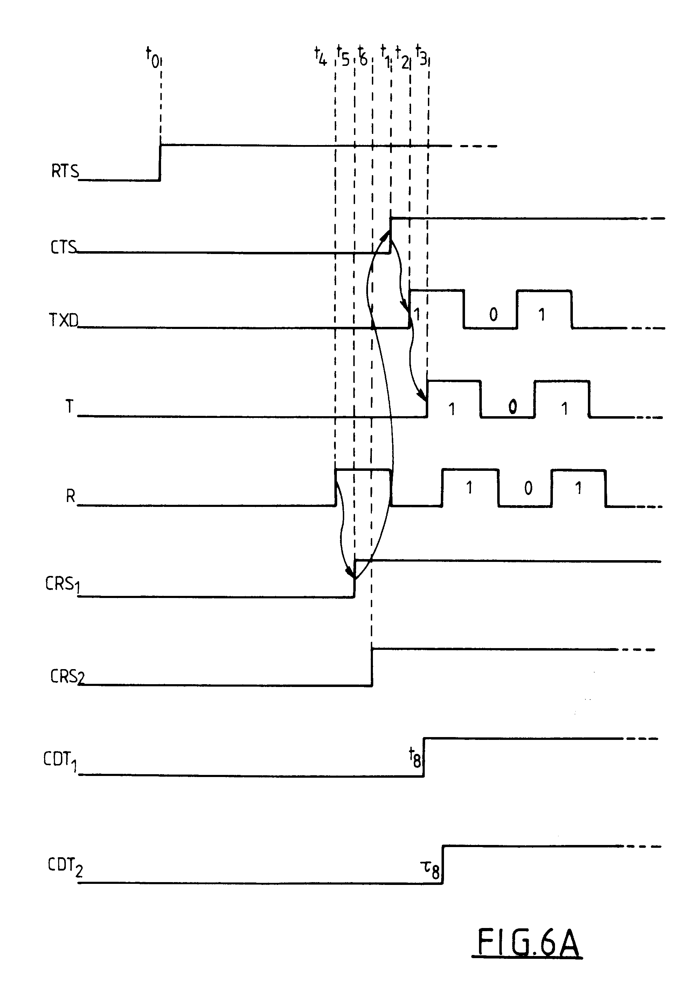

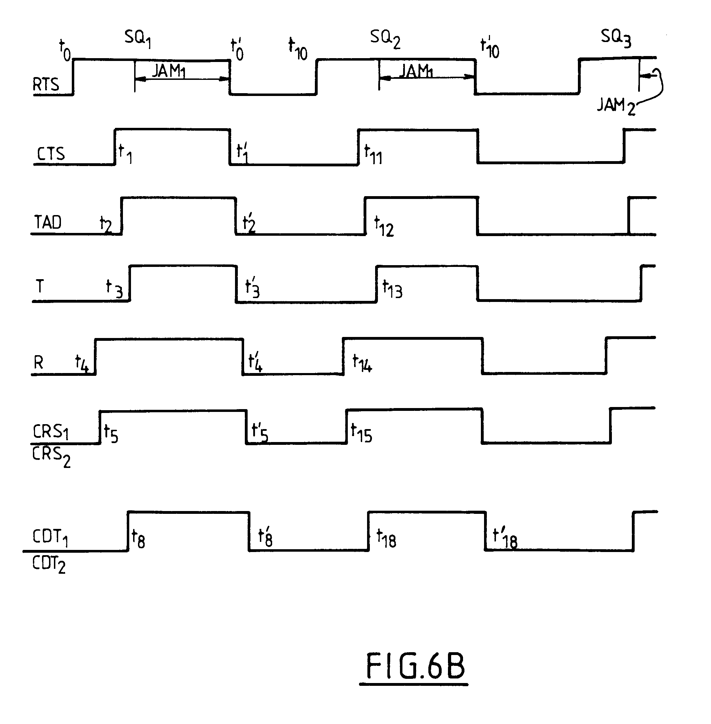

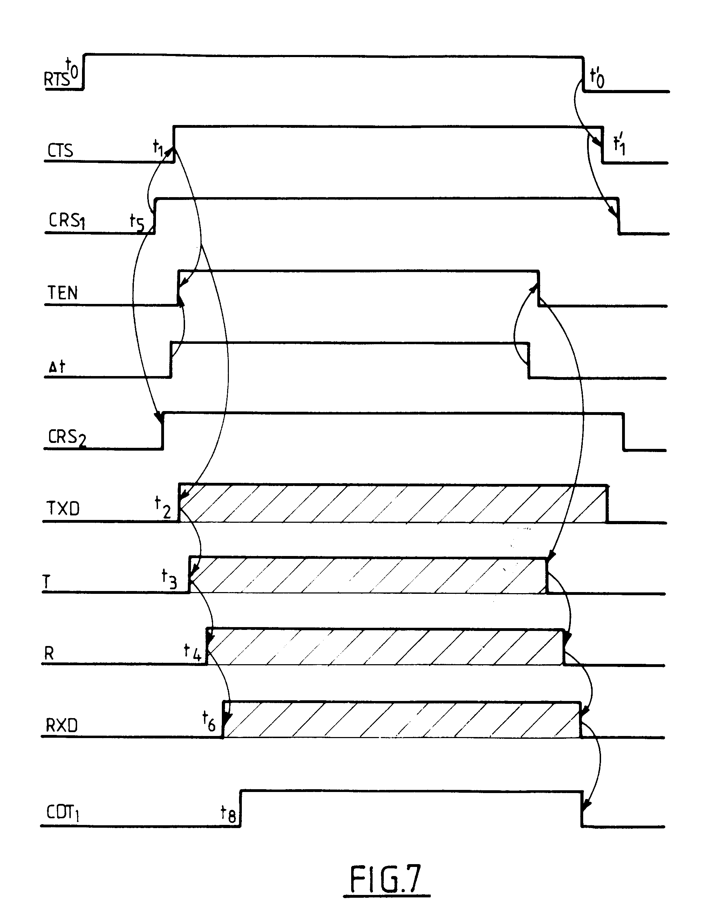

Dans ce cas, le fonctionnement du testeur TESTI selon l'invention montré à la figure 4 sera mieux compris en faisant référence aux figures 6a et 6b, ainsi qu'à la figure 7.

L'idée essentielle qui régit le fonctionnement du testeur selon l'invention est la suivante : elle consiste, lorsque il y a demande d'émission, à émettre le signal RTS au moyen de GENCOLI à l'instant $t_0$ et à ne lui retourner le signal CTS à l'instant $t_1$, (c'est-à-dire à autoriser l'émission d'une trame d'information) par l'intermédiaire du dispositif DISCOLI que si un message d'informations passe sur le réseau RLE, c'est-à-dire si le signal $CRS_1$ émis par le détecteur de présence d'émission SILI à l'instant $t_5$ est actif, c'est-à-dire égal au 1 logique. En d'autres termes, après la montée du signal RTS au 1 logique à l'instant $t_0$, le générateur de collisions GENCOLI attend qu'un message d'information passe sur le réseau pour commencer son émission, et émettre ensuite le signal TXD à l'instant $t_2$. Le dispositif VALIDI au moyen du signal TEN valide alors l'émission par ENCODI du signal T. Le message qui passe sur le réseau est désigné par R et est montré à la figure 6a. Il est reçu à partir de l'instant $t_4$ et est composé d'une trame d'informations conforme aux normes IEEE. Le signal $CRS_2$ peut, selon un mode de réalisation de l'invention, rester égal au zéro logique.

Il est clair que nous sommes alors en présence d'une collision puisque simultanément, il y a d'une part présence d'une émission sous forme d'un signal T, émis par le circuit ENCDECI et d'autre part d'une trame d'informations R émise par une station quelconque du réseau. De la sorte, il y a détection d'une collision au niveau du transceiver $TRC_i$ et délivrance par le circuit d'enregistrement de collisions COLI, d'un signal de collision $CDT_1$ à l'instant $t_8$ qui est transmis à l'enregistreur de collisions DETCOLI par l'intermédiaire du dispositif DISCOLI à l'instant $\hat{t}8$ (voisin de $t_8$) sous forme du signal $CDT_2$ (et également retransmis par DETCOLI à GENCOLI).

On peut dire que le signal CTS est un signal d'autorisation de collision.

On peut donc considérer qu'une des caractéristiques essentielle de l'invention consiste à remplacer le circuit d'émission EM contenu dans le circuit CER de la figure 2 par un générateur de collisions GENCOLI, lequel n'émet que s'il y a présence d'un message émis sur le réseau par une autre station. En d'autres termes le générateur de collisions GENCOLI n'émettra que s'il y a simultanément détection de présence de porteuse par le circuit SILI (signal $CRS_1$) et que s'il y a demande d'émission ou un ordre d'émission quelconque (REM, voir ci-dessus).

On voit donc que, alors que le circuit d'émission EM du circuit d'émission et de réception CER montré à la figure 2 n'émet de messages que s'il y a silence sur l'ensemble du réseau, au contraire, le générateur de collisions GENCOLI n'émettra que s'il y a présence d'un message sur le réseau.

A ce stade des opérations effectuées par le circuit d'émission et de réception CERI, on dispose, selon une particularité du testeur selon l'invention, de deux possibilités, définies chacune par une valeur différente du signal $VALID_1$. (Figures 6B et 7).

1) <u>Première possibilité : appelée encore mode multicollisions :</u> alors $VALID_1$ est égal au un logique.

Le signal $CDT_1$ est transmis sous forme du signal $CDT_2$ au générateur de collisions GENCOLI, par l'enregistreur de collisions DETCOLI.

Le signal TEN est alors identique à CTS.

Le générateur de collisions GENCOLI émet alors des données de brouillage (JAM) puis cesse d'émettre (tous les signaux à savoir RTS, CTS (TEN), TXD, T, R, $CDT_1$ et $CDT_2$, ainsi que $CRS_1$ retombent alors au 0 logique aux instants correspondants $t'_0$, $t'_1$, $t'_2$, $t'_3$, $t'_4$, $t'_5$, $t'_8$). Le générateur de collisions GENCOLI, applique alors, sous le contrôle d'un circuit de commande d'émission (réalisé sous la forme d'un microprocesseur, analogue par exemple à ceux des stations, voir figure 1c) l'algorithme de "BACKOFF" défini par la norme IEEE 802.3 et tente, 16 fois de suite, à des moments semi-aléatoires, de réémettre la même trame, c'est-à-dire que l'on a une suite de séquences identiques comportant des signaux analogues, à savoir les séquences $SQ_2$ à $SQ_{16}$ qui reproduisent la première séquence $SQ_1$. Ainsi pour la séquence $SQ_2$, le signal RTS est émis à l'instant $t_{10}$, le signal CTS à l'instant $t_{11}$, etc, le signal $CDT_1$ étant émis à l'instant $t_{18}$. De même, ces mêmes signaux retombent au 0 logique aux instants $t'_{10}$ à $t'_{18}$. Il est évident qu'un raisonnement analogue peut être effectué pour les séquences $SQ_3$ à $SQ_{16}$.

Au bout de seize tentatives infructueuses, le générateur de collisions GENCOLI avertit par un signal FIN le circuit de commande d'émission CCEI qui donne l'ordre (signal FINPC) au générateur de collisions d'abandonner la production de collisions.

On dispose donc ainsi, selon le mode multicollisions, d'un moyen automatique de réaliser jusqu'à 16 collisions successives. Ce nombre peut d'ailleurs être programmé dans cette limite, c'est-à-dire qu'il peut être égal ou inférieur à 16, la mise en mode multicollisions étant invalidée par le circuit de commande d'émission au bout d'un certain nombre de séquences, en agissant sur l'interrupteur de sélection SELECTI, qui fait alors tomber le signal $VALID_1$ au 0 logique. Une variante de réalisation consiste à contrôler SELECTI par un logiciel actionné par le microprocesseur.

2) Deuxième possibilité : mode monocollision : alors $\overline{VALID_1}$ est égal au zéro logique.

Le signal $CDT_1$ n'est pas validé par le dispositif DISCOLI qui ne transmet pas, de ce fait le signal $CDT_2$ au générateur de collisions GENCOLI. Ce dernier ne voit donc pas la collision et poursuit normalement l'émission de son message TXD. Ce dernier, quant il est normal (c'est-à-dire conforme au format de la trame telle que définie dans la norme IEEE) a une durée supérieure à la durée de tout message collisionné. Si l'on veut que le message émis par le générateur de collisions GENCOLI, en présence de la collision détectée, ait la durée spécifiée (c'est-à-dire la durée d'un message avec collision), il convient alors d'inhiber le fonctionnement du circuit d'encodage et de décodage ENCDECI. Celui-ci interrompt la transmission du message, bien que le générateur GENCOLI achève sa transmission normale, suivant le format de trame normalisé. On n'autorise donc la transmission des données T vers le transceiver que pendant un temps $\Delta t$ pendant lequel le signal TEN délivré par VALIDI est égal au 1 logique.

Lorsque le signal TEN retombe au 0 logique (voir figure 7), les signaux au T, R, RXD, et $CDT_1$ retombent successivement les uns après les autres au 0 logique.

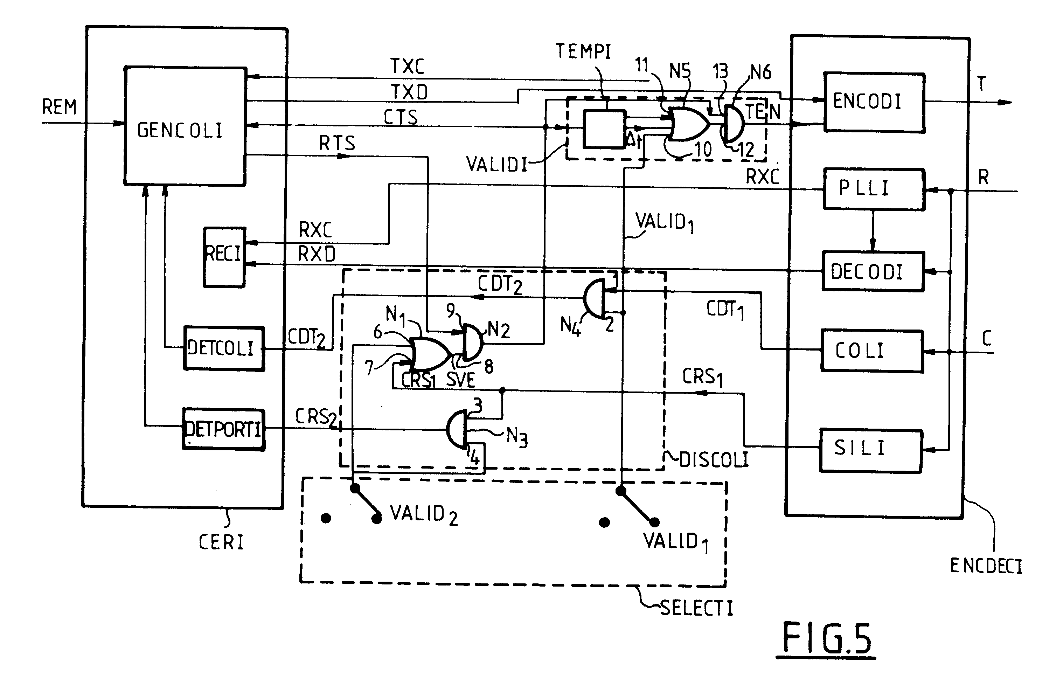

On considère la figure 5 qui représente un mode de réalisation particulier du testeur TESTI selon l'invention.

Le dispositif DISCOLI comprend une porte OU $N_1$, une porte ET $N_2$, une porte ET $N_3$, une porte ET $N_4$.

La porte $N_4$ est disposée entre le circuit d'enregistrement de collisions COLI et le circuit d'enregistrement de collisions DETCOLI du circuit CERI. Elle reçoit sur chacune de ses entrées 1 et 2, respectivement les signaux $CDT_1$ et $VALID_1$. Elle délivre le signal $CDT_2$.

La porte $N_3$ reçoit respectivement sur ses entrées 3, 4 les signaux $CRS_1$, $VALID_2$ (mode collision). Cette porte $N_3$ délivre le signal $CRS_2$ qui est envoyé au circuit DETPORTI de détection de porteuse du circuit CERI.

La porte OU $N_1$ reçoit respectivement sur ses entrées 6 et 7 les signaux $CRS_1$, d'une part et d'autre part le signal $VALID_2$. Cette porte délivre un signal SVE qui est égal au 1 logique lorsque les signaux $CRS_1$ ou $VALID_2$ sont égaux au 1 logique. Ce signal de validation d'émission SVE est envoyé sur l'entrée 8 de la porte ET $N_2$ dont la seconde entrée 9 reçoit le signal RTS émis par le générateur de collision GENCOLI. Le signal délivré par $N_2$ est CTS qui est envoyé d'une part vers GENCOLI, et d'autre part vers le dispositif de validation VALIDI. Ce dernier comprend un circuit de temporisation TEMPI, une porte OU $N_5$ à deux entrées 10 et 11 et une porte ET $N_6$ à deux entrées 12 et 13. Le circuit TEMPI reçoit le signal CTS et le retransmet sous forme d'un signal $\Delta t$ de durée déterminée ($\delta t$) à l'entrée 11 de la porte OU $N_5$ dont l'entrée 10 reçoit le signal $VALID_1$. Le signal $\Delta t$ est transmis par la porte OU $N_5$ à l'entrée 12 de la porte ET $N_6$ dont l'entrée 13 reçoit le signal CTS. Cette porte $N_6$ envoie le signal TEN au circuit ENCODI.

Dans un second mode de réalisation particulier de l'invention, le testeur TESTI peut fonctionner suivant trois modalités :

a) modalité de collision : dans ce cas, le testeur TESTI fonctionne suivant l'un des deux modes multicollisions ou monocollision décrit ci-dessus. Le testeur est dit esclave.

b) modalité d'émission : (voir également ci-dessus) dans ce cas, le circuit GENCOLI fonctionne exactement de la même manière que le circuit EM de l'une quelconque des stations $S_i$ du réseau (voir figures 2, 3a, 3b). Le testeur est dit maître.

c) modalité de réception : dans ce cas, seul le circuit RECI du testeur TESTI fonctionne, (le circuit d'émission GENCOLI ne fonctionnant pas) de la même façon que le circuit de réception REC du circuit CER montré à la figure 2. (En envoyant les signaux qu'il reçoit à une mémoire, non représentée pour simplifier, qui joue le même rôle que la mémoire MEMO de la figure 1c).

Le fonctionnement du testeur, tel que montré à la figure 5 est alors le suivant :

En modalité d'émission, $VALID_2$ est égal à un. Dès l'émission du signal RTS par GENCOLI, du fait que SVE = $VALID_2$ + CRS (porte OU $N_1$) est égal à 1 (on dit également que SVE est vrai), le signal CTS émis par la porte ET $N_2$ est égal au un logique et le signal TXD est alors transmis à l'encodeur. Par ailleurs $VALID_1$ est tel que le signal TEN correspond à CTS. Le circuit ENCDECI peut alors encoder le signal TXD et délivrer T. $CRS_2$ et $CDT_2$ sont identiques respectivement à $CRS_2$ et $CDT_2$. (En envoyant les signaux qu'il reçoit à une mémoire, non représentée pour simplifier, qui joue le même rôle que la mémoire MEMO de la figure 1C).

En modalité de collision, $VALID_2$ est égal à zéro. Donc $CRS_2$ est égal au zéro logique (voir porte ET $N_3$). D'autre part, le signal SVE émis par la porte OU $N_1$ n'est vrai que si $CRS_1$ est égal à un.

Dans ce cas, si le générateur de collisions GENCOLI reçoit une demande d'émission REM de la part du circuit de commande d'émission du testeur (voir ci-dessus), il émet le signal RTS. CTS émis par la porte ET $N_2$ est égal au un logique si SVE est vrai, c'est-à-dire si $CRS_1$ est égal à un.

Le générateur GENCOLI est alors autorisé à émettre.

Si l'on est en mode multicollisions $VALID_1$ est égal à 1. La porte OU $N_5$ délivre un signal égal à un à la porte ET $N_6$ qui reçoit par ailleurs CTS égal au un logique. Donc le signal TEN délivré par $N_6$ est égal à CTS. Par ailleurs, puisqu'il y a alors collision (voir plus haut), $CDT_1$ est égal au un logique. Il en est de même pour $CDT_2$ qui est retransmis par DETCOLI au générateur GENCOLI.

Ce dernier, voyant la collision, émet un signal de brouillage. Le fonctionnement du testeur selon l'invention est alors celui défini plus haut, en référence aux figures 6a et 6b.

Si l'on est en mode monocollision, $VALID_1$ est égal à zéro, donc $CDT_2$ est égal au zéro logique quand $CDT_1$ est égal à un (porte $N_4$). GENCOLI ne

voyant pas la collision continue à émettre normalement. TEN tombe au zéro logique quand $\Delta t$ tombe au zéro logique, au bout d'un temps déterminé. Le circuit ENCDECI cesse alors d'émettre le signal T.

Dans un mode particulier de réalisation de l'invention, le testeur TESTI est inséré dans un boîtier parallélépipédique dont l'une des faces comporte au moins une diode lumineuse alimentée par le signal $CDT_1$. Lorsqu l'une collision est détectée, la diode s'allume et avertit ainsi l'opérateur qui met en oeuvre le testeur qu'une collision a bien été détectée.

Pour tester les différents transceivers des différents segments élémentaires du réseau, on procède de la manière suivante, en considérant par exemple le segment élémentaire $SE_1$ (il est évident qu'un raisonnement analogue peut être fait pour chacun des segments élémentaires).

On connecte les deux testeurs $TESTI_1$ et $TESTI_2$ selon l'invention, par exemple aux transceivers $TRC_3$ et $TRC_4$ du segment élémentaire $SE_1$ du réseau RLE de la figure 1a.

Le premier testeur $TESTI_1$ fonctionne suivant la modalité de collision a alors que le second testeur $TESTI_2$ fonctionne selon la modalité d'émission b.

Il est évident que chacun des deux testeurs doit voir la collision et que les diodes lumineuses correspondantes des deux boîtiers doivent s'allumer. Si l'un des deux testeurs ne voit pas la collision, cela signifie que l'un des deux transceivers $TRC_3$ et $TRC_4$ ne fonctionne pas correctement. En déplaçant le long du segment élémentaire $SE_1$ les deux testeurs $TESTI_1$ et $TESTI_2$, on pourra vérifier le bon fonctionnement de chacun des détecteurs de collision de tous les transceivers $TRC_1$ à $TRC_4$, etc.

Pour vérifier le bon fonctionnement des répéteurs, on utilise trois testeurs, à savoir $TESTI_1$, $TESTI_2$ et $TESTI_3$ (voir figure 1a) les deux premiers testeurs étant montrés par exemple connectés aux transceivers $TRC_3$ et $TRC_4$, et le troisième au transceiver $TRC_{i-1}$ du segment élémentaire $SE_2$.

Le premier testeur, par exemple $TESTI_1$ fonctionne en modalité collision (esclave), alors que le second testeur $TESTI_2$ fonctionne en modalité émission (maître), le troisième testeur fonctionnant uniquement en modalité réception.

Selon la norme IEEE802.3, lorsqu'un répéteur voit une collision il émet une trame courte. Cette trame doit donc être vue par le testeur $TESTI_3$. Si cette trame courte émise par le répéteur n'est pas vue par ce dernier cela signifie que le répéteur a mal fonctionné (ici le répéteur $R_1$).

Selon la norme IEEE802.3, tout répéteur qui voit sur un segment élémentaire qui lui est raccordé, 32 collisions consécutives de suite, doit mettre hors d'état de fonctionner ce segment élémentaire.

On voit donc que l'intérêt du mode multicollisions qui limite le nombre de collisions à 16, permet de vérifier que le répéteur détecte correctement les collisions, celles-ci étant produites en nombre suffisant, sans que l'on risque de voir le segment élémentaire qui lui est accordé, mis hors d'état de fonctionner.

En revanche, en mode monocollision, si le testeur $TESTI_2$ qui fonctionne en modalité émission envoie des trames de façon cyclique à un taux de charge déterminé, on pourra vérifier que le répéteur met hors d'état de fonctionner un segment élémentaire, lorsque l'on aura enregistré 32 collisions de suite.

## Revendications

1. Testeur (TESTI) de réseau local (RLE), (RLS), du type à méthode d'accès à test de porteuse et détections de collisions (CSMA/CD) et à système de transmission à architecture en bus (BUS), le réseau (RLE-RLS) comprenant au moins un segment élémentaire ($SE_1$, ..., $SE_p$) comprenant une pluralité de stations donc chacune est reliée au bus (BUS) et comprend un circuit d'émission et de réception (CER) commandé par un circuit de commandes d'émission (CCEI) et associé à un circuit d'encodage et de décodage (ENCDEC) disposé entre le circuit d'émission (CER) et le bus (BUS), le circuit d'émission et de réception (CER) n'émettant un message qu'en l'absence d'émission par tout autre station du réseau, comprenant un circuit d'émission et de réception (CERI) associé à un circuit d'encodage et de décodage (ENCDECI), qui sont analogues à ceux de chaque station, le circuit d'émission et de réception (CERI) du testeur incluant de plus un dispositif de génération de collisions (GENCOLI) qui émet une trame d'informations dès qu'il a reçu du circuit d'encodage et de décodage du testeur (ENCDECI) un signal ($CRS_1$-$CRS_2$) indiquant la présence d'une émission d'une trame par une station quelconque du réseau autre que lui-même, et un ordre d'émission (REM) de la part du circuit de commande d'émission du testeur (CCEI), cette dernière trame étant reçue par le circuit d'encodage et de décodage du testeur (ENCDECI) caractérisé en ce qu'il comprend un dispositif d'autorisation de collision (DISCOLI) disposé entre le circuit d'encodage et de décodage (ENCDECI) et le dispositif de génération de collisions, recevant ledit signal $CRS_1$ de présence d'émission d'une trame R sur le réseau et un signal de demande d'émission RTS émis par le dispositif de génération de collision lorsque ce dernier reçoit ledit ordre d'émission REM, et délivrant en retour un signal d'autorisation de collision CTS au dispositif de génération de collision (GENCOLI) lorsque le signal de présence d'émission $CRS_1$ est actif, ce dernier émettant alors, en réponse au signal d'autorisation de collision, la trame TXD envoyée au circuit d'encodage et de décodage du testeur (ENCDECI).

2. Mode multicollisions de mise en oeuvre du testeur selon la revendication 1 comportant les opérations suivantes consistant à :

a) produire une première séquence $SQ_1$ qui consiste, successivement à :
   - émettre un signal de demande d'émission RTS dès qu'il reçoit un ordre d'émission REM de la part du circuit de commande d'émission,
   - attendre qu'un signal de détection de présence d'émission $CRS_1$ émis par le circuit d'encodage, signifiant qu'un message d'informations passe sur le réseau, soit actif (égal au 1 logique).
   - émettre au moyen du générateur de collisions (GENCOLI) un signal d'émission TXD dès que le signal de détection de présence d'émission $CRS_1$ est actif,
   - émettre au moyen du générateur de collisions (GENCOLI) des données de brouillage (JAM), puis à cesser d'émettre dès que les données de brouillage ont cessé d'être émises,

b) produire une suite de séquences $SQ_2$ à $SQ_n$ identiques à la précédente, en nombre n déterminé, caractérisé en ce que :

c) lors de l'opération a), les données de brouillage (JAM) sont émises au moyen du générateur de collision (GENCOLI) dès que la collision entre le signal émis par ce dernier et le message d'information qui passe sur le réseau a lieu,

d) lors de l'opération b), le générateur de collisions (GENCOLI) avertit le circuit de commande d'émission lorsque la nième séquence est terminée, ce dernier donnant alors l'ordre au générateur de collisions d'abandonner la production de collisions.

3. Testeur selon la revendication 1, pour mettre en oeuvre le mode multicollisions selon la revendication 2, caractérisé en ce qu'il comprend un dispositif (SELECTI) de commande de modalité de fonctionnement connecté au dispositif d'autorisation de collision (DISCOLI) pour autoriser la mise en oeuvre du mode multicollisions en envoyant un signal $VALID_1$ au dispositif d'autorisation lequel est adapté pour recevoir un premier signal de collision $CDT_1$ émis par le circuit d'encodage et de décodage (ENCDECI) et pour envoyer, en réponse à ce premier signal et au signal $VALID_1$, un second signal de collision $CDT_2$ identique au premier, au dispositif de génération de collision (GENCOLI) disposé de façon à émettre, en réponse au second signal, les données de brouillage JAM.

4. Testeur selon la revendication 3, caractérisé en ce qu'il comprend un dispositif de validation (VALIDI) recevant les signaux $VALID_1$ et CTS et délivrant un signal de validation TEN au circuit d'encodage et de décodage, pour autoriser l'encodage de la trame TXD pendant toute la durée de chacune des séquences $SQ_1$ à $SQ_n$.

**Claims**

1. A tester (TESTI) for a local network (RLE), (RLS), of the type having carrier sense multiple access with collision detection (CSMA/CD) and having a transmission system with bus-type architecture (BUS), the network (RLE-RLS) comprising at least one elementary segment ($SE_1$, ..., $SE_p$) comprising a plurality of stations, each of which is connected to the bus (BUS) and comprises a transmission and reception circuit (CER) controlled by a transmission control circuit (CCEI) and associated with an encoding and decoding circuit (ENCDEC) disposed between the transmission circuit (CER) and the bus (BUS), the transmission and reception circuit (CER) only transmitting a message in the absence of transmission by any other station in the network, comprising a transmission and reception circuit (CERI) associated with an encoding and decoding circuit (ENCDECI) which are similar to those of each station, the transmission and reception circuit (CERI) of the tester further including a collision generation device (GENCOLI) which transmits a frame of data as soon as it has received from the encoding and decoding circuit of the tester (ENCDECI) a signal ($CRS_1$-$CSR_2$) indicating the presence of the transmission of a frame by any station in the network other than itself, and a transmission order (REM) from the transmission control circuit of the tester (CCEI), the latter frame being received by the encoding and decoding circuit of the tester (ENCDECI), characterised in that it comprises a collision authorisation device (DISCOLI) arranged between the encoding and decoding circuit (ENCDECI) and the collision generation device, receiving said signal $CRS_1$ of the presence of transmission of a frame R on the network and a request-to-send signal RTS transmitted by the collision generation device when the latter receives said transmission order REM, and delivering in return a collision authorisation signal CTS to the collision generation device (GENCOLI) when the transmission-present signal $CRS_1$ is active, the latter then, in response to the collision authorisation signal, transmitting the frame TXD sent to the encoding and decoding circuit of the tester (ENCDECI).

2. A multi-collision mode for implementing the tester according to Claim 1 comprising the following operations consisting of:
   a) producing a first sequence $SQ_1$ which consists, successively, of:
   - transmitting a request-to-send signal RTS as soon as it receives a transmission order REM from the transmission control circuit,
   - waiting for a transmission-present detection signal $CRS_1$ transmitted by the encoding circuit, signifying that an information message is being sent over the network, to become active (equal to logic 1),
   - by means of the collision generator (GENCOLI), transmitting a transmission signal TXD as soon as the transmission-present detection signal $CRS_1$ is active,
   - by means of the collision generator (GENCOLI), transmitting jamming data (JAM), then ceasing to transmit as soon as the jamming data have ceased to be transmitted,
   b) producing a series of sequences $SQ_2$ to $SQ_n$ identical to the preceding one, of a given number n,
   characterised in that:
   c) during operation a), the jamming data (JAM) are transmitted by means of the collision generator (GENCOLI) as soon as the collision between the signal transmitted by the latter and the information message being sent over the network takes place,
   d) during operation b), the collision generator (GENCOLI) warns the transmission control circuit when the nth sequence is completed, the latter then giving an order to the collision generator to stop producing collisions.

3. A tester according to Claim 1, for implementing the multicollision mode according to Claim 2, characterised in that it comprises a device (SELECTI) for controlling the operating mode, connected to the collision authorisation device (DISCOLI), to authorise the implementation of the multi-collision mode by sending a signal $VALID_1$ to the authorisation device which is designed to receive a first collision signal $CDT_1$ transmitted by the encoding and decoding circuit (ENCDECI) and to send, in response to this first signal and to the signal $VALID_1$, a second collision signal $CDT_2$, identical to the first, to the collision generation device (GENCOLI) disposed so as to transmit jamming data JAM in response to the second signal.

4. A tester according to Claim 3, characterised in that it comprises a validation device (VALIDI) receiving the signals $VALID_1$ and CTS and delivering a validation signal TEN to the encoding and decoding circuit, to authorize the encoding of the frame TXD throughout the period of each of the sequences $SQ_1$ to $SQ_n$.

**Patentansprüche**

1. Prüfgerät (TESTI) für lokales Netz (RLE), (RLS) des Typs mit dem Verfahren des Zugriffs durch Trägerprüfung und Kollisionserfassungen (CSMA/CD) und mit einem Übertragungssystem mit Busarchitektur (BUS), wobei das Netz (RLE - RLS) wenigstens einen Elementarabschnitt ($SE_1$,..., $SE_p$) aufweist, der mehrere Stationen umfaßt, von denen jede mit dem Bus (BUS) verbunden ist und eine Sende- und Empfangsschaltung (CER) enthält, die durch eine Sendesteuerschaltung (CCEI) gesteuert wird und einer Codierungs- und Decodierungsschaltung (ENCDEC) zugeordnet ist, die zwischen der Sendeschaltung (CER) und dem Bus (BUS) angeordnet ist, wobei die Sende- und Empfangsschaltung (CER) nur bei Abwesenheit einer Sendung von jeder anderen Station des Netzes, die eine einer Codierungs- und Decodierungsschaltung (ENCDECI) zugeordnete Sende- und Empfangsschaltung (CERI) enthält, welche zu denjenigen einer jeden Station analog sind, eine Nachricht aussendet, wobei die Sende- und Empfangsschaltung (CERI) des Prüfgeräts außerdem eine Kollisionserzeugungseinrichtung (GENCOLI) enthält, die einen Block von Informationen aussendet, sobald sie von der Codierungs- und Decodierungsschaltung des Prüfgeräts (ENCDECI) ein Signal ($CRS_1$ -$CRS_2$), das das Vorhandensein einer Sendung eines Rahmens von einer beliebigen anderen Station des Netzes anzeigt, und von der Sendesteuerschaltung des Prüfgeräts (CCEI) einen Sendebefehl (REM) empfängt, wobei dieser letztere Rahmen von der Codierungs- und Decodierungsschaltung des Prüfgeräts (ENCDECI) empfangen wird, dadurch gekennzeichnet, daß es eine Kollisionszulassungseinrichtung (DISCOLI) enthält, die zwischen der Codierüngs- und Decodierungsschaltung (ENCDECI) und der Kollisionserzeugungseinrichtung angeordnet ist und das Signal $CRS_1$ bezüglich des Vorhandenseins einer Sendung eines Rahmens R im Netz sowie ein Sendeanforderungssignal RTS empfängt, das von der Kollisionserzeugungseinrichtung ausgesandt wird, wenn diese letztere den Sendebefehl REM empfängt, und im Gegenzug ein Kollisionszulassungssignal (CTS) an die Kollisionserzeugungseinrichtung (GENCOLI) ausgibt, wenn das Signal bezüglich des Vorhandenseins einer Sendung $CRS_1$ aktiv ist, wobei diese letztere dann aufgrund des Kollisionszulassungssignals den an die Codierungs- und Decodierungsschaltung des Prüfgeräts (ENCDECI) geschickten Rahmen TXD aussendet.

2. Multikollisionsbetriebsart zum Betreiben des Prüfgeräts gemäß Anspruch 1, die die folgenden Operationen enthält, die darin bestehen, daß:

a) ein erster Ablauf $SQ_1$ erzeugt wird, der nacheinander darin besteht, daß:

- ein Sendeanforderungssignal RTS ausgesandt wird, sobald es von der Sendebefehlsschaltung einen Sendebefehl REM empfängt,

- gewartet wird, daß ein Signal bezüglich der Erfassung des Vorhandenseins einer Sendung $CRS_1$, das von der Codierungsschaltung ausgesandt wird und angibt, daß über das Netz eine Informationsnachricht läuft, aktiv ist (gleich der logischen 1 ist),

- mittels des Kollisionsgenerators (GENCOLI) ein Sendesignal TXD ausgesandt wird, sobald das Signal bezüglich der Erfassung des Vorhandenseins einer Sendung $CRS_1$ aktiv ist,

- mittels des Kollisionsgenerators (GENCOLI) Störungsdaten (JAM) ausgesandt werden und dann das Senden angehalten wird, sobald die Aussendung der Störungsdaten beendet worden ist,

b) eine Folge von zum vorhergehenden identischen Abläufen ($SQ_2$ bis $SQ_n$) in einer bestimmten Anzahl n erzeugt werden, dadurch gekennzeichnet, daß:

c) bei der Operation a) die Störungsdaten (JAM) mittels des Kollisionsgenerators (GENCOLI) ausgesendet werden, sobald die Kollision zwischen dem von diesem letzteren ausgesandten Signal und der über das Netz laufenden Informationsnachricht stattgefunden hat,

d) bei der Operation b) der Kollisionsgenerator (GENCOLI) die Sendesteuerschaltung benachrichtigt, wenn der n-te Ablauf beendet ist, wobei diese dann dem Kollisionsgenerator den Befehl erteilt, die Erzeugung von Kollisionen einzustellen,

3. Prüfgerät gemäß Anspruch 1 für die Ausführung der Multikollisionsbetriebsart gemäß Anspruch 2, dadurch gekennzeichnet, daß sie eine Einrichtung (SELECTI) zum Steuern der Funktionsweise aufweist, die mit der Kollisionszulassungseinrichtung (DISCOLI) verbunden ist, um die Ausführung der Multikollisionsbetriebsaat zuzulassen, indem sie an die Zulassungseinrichtung ein Signal $VALID_1$ schickt, wobei die Zulassungseirrichtung so beschaffen ist, daß sie ein von der Codierungs- und Decodierungsschaltung (ENCDECI) ausgesandtes erstes Kollisionssignal $CDT_1$ empfängt und aufgrund dieses ersten Signals und des Signals $VALID_1$ ein mit dem ersten identisches zweites Kollisionssignal $CDT_2$ an die Kollisionserzeugungseinrichtung (GENCOLI) schickt, die so angeordnet ist, daß sie aufgrund des zweiten Signals die Störungsdaten JAM aussendet.

4. Prüfgerät gemäß Anspruch 3, dadurch gekennzeichnet, daß sie eine Validierungseinrichtung (VALIDI) aufweist, die die Signale $VALID_1$ und CTS empfängt und an die Codierungs- und Decodierungsschaltung ein Validierungssignal TEN liefert, um die Codierung des Rahmens TXD während der gesamten Dauer eines jeden der Abläufe $SQ_1$ bis $SQ_n$ zuzulassen.

FIG.1a

FIG.1c

## FIG.1b

EP 0 333 558 B1

FIG.2

EP 0 333 558 B1

FIG.3a

FIG.3b

FIG.4

FIG.5

FIG.6A

FIG.6B

FIG.7